# EUROPÄISCHE PATENTSCHRIFT

(11) **EP 2 697 082 B1**
(45) Veröffentlichungstag und Bekanntmachung des Hinweises auf die Patenterteilung: **08.03.2017**
(21) Anmeldenummer: 12710226.7
(22) Anmeldetag: 19.03.2012
(51) Int. Cl.: B60G 3/18, B60G 7/00, B62D 17/00, B62D 7/14

(54) **FAHRZEUG-EINZELRADAUFHÄNGUNG FÜR EIN GERINGFÜGIG LENKBARES HINTERRAD EINES ZWEISPURIGEN FAHRZEUGS**
VEHICLE INDEPENDENT WHEEL SUSPENSION FOR A SLIGHTLY STEERABLE REAR WHEEL OF A DOUBLE-TRACK VEHICLE
SUSPENSION DE ROUE INDÉPENDANTE POUR UNE ROUE ARRIÈRE LÉGÈREMENT ORIENTABLE D'UN VÉHICULE À DEUX VOIES

(30) Priorität: 13.04.2011 DE 102011007283
(43) Veröffentlichungstag der Anmeldung: 19.02.2014
(73) Patentinhaber: Bayerische Motoren Werke Aktiengesellschaft, 80809 München (DE)
(72) Erfinder: JAKOB, Benjamin, 80807 München (DE)
(86) Internationale Anmeldenummer: PCT/EP2012/054840
(87) Internationale Veröffentlichungsnummer: WO 2012/139857

(56) Entgegenhaltungen:
- DE-A1- 3 827 039
- DE-A1-102006 055 288
- DE-A1-102006 055 294
- DE-A1-102006 055 295
- DE-A1-102009 004 123
- US-A- 4 709 935
- US-A- 4 978 131

## Beschreibung

Die Erfindung betrifft eine Fahrzeug-Einzelradaufhängung für ein mittels eines Aktuators zumindest geringfügig lenkbares Hinterrad eines zweispurigen Fahrzeugs, dessen Radträger durch einen sich im wesentlichen in Fahrzeug-Längsrichtung erstreckenden Längslenker sowie zwei sich zumindest annähernd in Fahrzeug-Querrichtung erstreckende und bei Betrachtung in Fahrzeug-Längsrichtung in verschiedenen Ebenen liegende und sich nicht schneidende Querlenker geführt ist, deren dem Radträger abgewandte Enden gelenkig direkt oder indirekt mit dem Fahrzeug-Aufbau verbunden sind, während das andere Ende jedes Querlenkers mittels eines Bolzens oder dergleichen über ein Gummilager oder ein zumindest einen geringen Drehfreiheitsgrad aufweisendes Gelenk am Radträger befestigt ist. Zum Stand der Technik wird neben der EP 0 052 663 B1 und der DE 38 27 039 A1 insbesondere auf die US 4,709,935 und weiterhin auf die US 4,978,131 verwiesen. Das Dokument US 4,978,131 wird als nächstliegender Stand der Technik betrachtet.

In der erstgenannten Schrift ist eine in der Fachwelt auch sog. Zentrallenkerachse beschrieben, die sich insbesondere bei angetriebenen Rädern durch ein günstiges kinematisches Verhalten auszeichnet und dabei vorteilhafter ist als die weiterhin bekannten sog. Schräglenkerachsen. In der zweitgenannten Schrift ist eine Möglichkeit aufgezeigt, wie ein solchermaßen geführtes Rad geringfügig gelenkt werden kann. Dabei ist der Spurwinkel dieses Rades mittels eines am fahrzeugaufbauseitigen Lager des Längslenkers geeignet angreifenden Aktuators einstellbar. Gesamthaft ist eine solche geringfügig lenkbare Achse in der US 4,709,935 gezeigt. Diese bekannte Anordnung benötigt nicht nur im Bereich des fahrzeugaufbauseitigen Längslenker-Lagers sondern auch in der näheren Umgebung des Längslenkers für dessen horizontale Verschwenkbarkeit (in Fahrzeug-Querrichtung) zusätzlichen Bauraum, welcher abhängig von der Gestaltung des Fahrzeug-Aufbaus in diesem Bereich möglicherweise nicht verfügbar ist. Gleiches gilt für den in der der US 4,978,131 gezeigten Stand der Technik, der eine ausgefallene Lenkeranordnung zeigt, indem dort der Längslenker quasi aus zwei Lenkern zusammengesetzt ist, wobei jeder sog. Teil-Längslenker mit einem der Querlenker verbunden und somit nicht direkt am Radträger angelenkt ist.

Vorliegend soll aufgezeigt werden, wie eine Einzelradaufhängung bzw. Fahrzeug-Achse mit den im Oberbegriff des Anspruchs 1 aufgeführten Merkmalen unter Beibehaltung der grundsätzlichen kinematischen und elastokinematischen Eigenschaften einer solchen Radaufhängung geringfügig lenkbar gestaltet werden kann, ohne dass im fahrzeugaufbauseitigen Endbereich des Längslenkers vermehrter Bauraumbedarf besteht (= Aufgabe der vorliegenden Erfindung).

Die Lösung dieser Aufgabe ist dadurch gekennzeichnet, dass mittels der selben beiden genannten Bolzen oder dgl. auch der Längslenker jeweils über ein Gummilager oder ein zumindest einen geringen Drehfreiheitsgrad aufweisendes Gelenk solchermaßen direkt mit dem Radträger verbunden ist, dass der Radträger gegenüber dem Längslenker zumindest geringfügig um eine im wesentlichen in Vertikalrichtung verlaufende und durch diese Gummilager oder Gelenke gebildete Schwenkachse verschwenkbar ist, wobei dieser so gebildete Dreh-Freiheitgrad des Radträgers durch ein am Radträger angelenktes Spurstangen-Element gebunden ist, welches mittels des Aktuators zumindest anteilig in Fahrzeug-Querrichtung verlagerbar ist. Vorteilhafte Aus- und Weiterbildungen sind Inhalt der Unteransprüche.

Erfindungsgemäß ist der Radträger nicht nur wie aus der oben zweitgenannten Schrift bekannt gegenüber den beiden Querlenkern, sondern auch gegenüber dem Längslenker um eine im wesentlichen vertikal verlaufende Schwenkachse zumindest geringfügig verschwenkbar, so dass - abweichend von diesem bekannten Stand der Technik - der Längslenker selbst keine für die vorliegende Erfindung relevante Bewegungsfreiheit in Fahrzeug-Querrichtung benötigt. Die Schwenkachse (auch Spreizachse oder Lenkdrehachse genannt) ist dabei durch zwei Gelenke oder Gummilager oder dgl. gebildet, über die der Radträger mit dem Längslenker verbunden ist. Erfindungsgemäß sind die beiden letztgenannten Gelenke oder Gummilager mit den selben Bolzen oder dergleichen befestigt, mit denen auch die Gelenke oder Gummilager der beiden Querlenker befestigt sind. Vorzugsweise sind in geeignete Aufnahmen des Radträgers die beiden Gelenke oder dgl. eingepresst und jeweils durch einen Bolzen oder dgl. am Längslenker befestigt, durch welchem weiterhin ein in einen Querlenker eingepresstes Gummilager am Längslenker befestigt ist. Mit dieser besonders vorteilhaften Anordnung oder Anbindung wird nicht nur der Bauraumbedarf minimiert sondern auch der Montageprozess so einfach als möglich gehalten, da lediglich zwei Verschraubungen, nämlich über die beiden Bolzen, erforderlich sind, um den Radträger mit dem Längslenker und den beiden Querlenkern zu verbinden.

Beispielsweise können am Radträger zwei sog. Tragflansche vorgesehen sein, die sich im wesentlichen in Vertikalrichtung und zumindest annähernd in Fahrzeug-Querrichtung erstrecken und somit (jeweils) eine zumindest annähernd senkrecht zur Fahrzeug-Längsrichtung liegende Ebene beschreiben, wobei beide Tragflansche in einer gemeinsamen Ebene oder in nur geringfügig voneinander beabstandeten Ebenen liegen können. In jeden solchen Tragflansch kann beispielsweise ein Zapfengelenk (vgl. bspw. DE 10 2004 017 639 A1) mit seinem Gelenkgehäuse "kopf") eingepresst sein, dessen Gelenkzapfen sich im wesentlichen horizontal zumindest annähernd in Fahrzeug-Längsrichtung erstreckt und dabei durch zumindest einen Flansch oder eine Lasche des Längslenkers hindurchtritt und weiterhin ein in den einen der beiden Querlenker eingepresstes Gummilager aufnimmt, welches sich bspw. unter Zwischenlage eines Abstandshalters am Flansch (bzw. an der Lasche) des Längslenkers abstützt und durch eine auf das freie Ende des Gelenkzapfens aufgeschraubte Mutter gehalten bzw. gegen den Längslenker-Flansch (-Lasche) gesamthaft verspannt ist. Dabei bildet also der Gelenkzapfen des Zapfengelenks den im unabhängigen Patentanspruch genannten Bolzen und es beschreiben die Kugelmittelpunkte der Gelenkkugeln der beiden Zapfengelenke die genannte Schwenkachse.

Alternativ können anstelle solcher beispielhaft genannten Zapfengelenke übliche Gummilager oder Kugelgelenke ("Kugelhülsengelenke") oder allgemein Gelenke mit zumindest einem geringen, d.h. sich über einen ausreichenden Winkelbereich erstreckenden Drehfreiheitsgrad in die ebenfalls nur beispielhaft genannten Tragflansche des Radträgers geeignet eingesetzt sein, die dann jeweils mittels eines Bolzens, vorzugsweise einer Schraube, gegebenenfalls unter Zwischenschaltung von Abstandshaltern zusammen mit einem Gummilager oder Gelenk eines der beiden Querlenker am Längslenker befestigt bzw. gegenüber diesem verspannt sind.

Ausdrücklich sei nochmals darauf hingewiesen, dass auch die vorhergehend genannten Tragflansche des Radträgers nur ein mögliches Beispiel für eine Ausführungsform der vorliegenden Erfindung darstellen. Alternative Ausführungsformen sind selbstverständlich möglich; wesentlich ist nur, dass der Radträger über zwei eine im wesentlichen vertikal verlaufende Schwenkachse bildende Gelenke oder Gummilager oder dgl. jeweils mittels eines Bolzens oder dgl. am Längslenker angebunden ist, wobei jeder Bolzen weiterhin über ein weiteres Gelenk oder Gummilager oder dgl. der Befestigung eines der Querlenker am Längslenker dient. Die Anordnung der jeweiligen Gummilager oder Gelenke auf dem besagten Bolzen kann dabei zweischnittig oder einschnittig sein, d.h. dass beispielsweise am Radträger anstelle eines genannten Tragflansches zwei nebeneinander liegende Laschen vorgesehen sein können, die jeweils eine zumindest annähernd senkrecht zur Fahrzeug-Längsachse liegende Ebene beschreiben und zwischen denen beispielsweise ein Gummilager mittels des genannten Bolzens eingespannt ist. Selbstverständlich kann auch der Längslenker gelenkig am Radträger befestigt sein, indem in den Längslenker zwei Gelenke geeignet eingesetzt sind, die jeweils mittels eines Bolzens, über den weiterhin einer der beiden Querlenker am Radträger befestigt ist, am Radträger befestigt sind.

Die genannte Schwenkachse bzw. die diese bildenden Gelenke oder dgl., um die der Radträger erfindungsgemäß relativ zum Längslenker verschwenkbar ist, schafft bzw. schaffen einen Freiheitsgrad, der erfindungsgemäß durch ein sog. Spurstangen-Element gebunden wird, das durch einen Aktuator (Stellmotor) zumindest anteilig in Fahrzeug-Querrichtung verlagerbar ist. Der Anlenkpunkt des Spurstangen-Elements am Radträger beschreibt bei einer solchen Verlagerung ein (kurzes) Kreisbogensegment, dessen Mittelpunkt auf der besagten Schwenkachse liegt. Aufgrund von auf das am Radträger drehbar befestigte Fahrzeug-Rad einwirkender äußerer Kräfte können Relativbewegungen zwischen dem Radträger und dem an einer geeigneten Stelle an der Radaufhängung oder im Bereich der Radaufhängung am Fahrzeug-Aufbau befestigten Aktuator auftreten, weshalb das genannte Spurstangen-Element solchermaßen am Radträger und/oder an einem verlagerbaren Stellelement des Aktuators angelenkt sein sollte, dass zumindest das Stellelement des Aktuators, vorzugsweise auch das Spurstangen-Element selbst von Querkräften und Drehmomenten, die nicht um die Achse des Stellelements oder des Spurstangen-Elements gerichtet sind, im wesentlichen frei gehalten ist. Hierdurch wird eine Schädigung des Aktuators durch solche äußeren Kräfte (Rad-Seitenführungskräfte, Rad-Längskräfte und Vertikalkräfte) ausgeschlossen. Grundsätzlich kann jedem Radträger der Hinterachse ein eigener Aktuator zugeordnet sein, der dann vorzugsweise am Längslenker gelagert ist, oder es kann für die beiden Radträger der Hinterachse ein einziger im wesentlichen zentral angeordneter Aktuator vorgesehen sein, der beispielsweise an einem Achsträger, alternativ am Fahrzeug-Aufbau, gelagert ist. Grundsätzlich kann die Lagerung des Aktuators starr oder ihrerseits gelenkig gestaltet sein. Letzteres stellt eine Möglichkeit dar, das Stellelement des Aktuators, bei welchem es sich beispielsweise um eine von einem Elektromotor (als eigentlichem Aktuator) über ein geeignetes Getriebe (als ein Bestandteil des Aktuators) längs verlagerbare Spindel handeln kann, frei von auf diese Spindel einwirkenden Querkräften und Drehmomenten, die aus äußeren auf das vom Radträger getragene Rad einwirkenden Kräften resultieren, zu halten, wobei die gelenkige Lagerung des Aktuators selbstverständlich solchermaßen zu gestalten ist, dass die Bewegung des Aktuator-Stellelements unverfälscht auf das mit diesem verbundene Spurstangen-Element übertragen wird.

Bereits erwähnt wurden auf das vom Radträger getragene Rad einwirkende Kräfte, die wie üblich über die beiden Querlenker und den Längslenker sowie ein Tragfederelement am Fahrzeug-Aufbau abgestützt sind. In Abhängigkeit von der Gestaltung der die besagte Schwenkachse bildenden Gelenke zwischen dem Radträger und dem Längslenker kann es empfehlenswert sein, eine weitere vorzugsweise geringfügig elastische Abstützung zwischen dem Radträger und dem Längslenker vorzusehen, die dann jedoch einen Freiheitsgrad für die vom Aktuator hervorgerufene Verschwenkbewegung des Radträgers gegenüber dem Längslenker aufweisen muss. Um also den Radträger gegenüber dem Längslenker robuster und steifer zu lagern ohne das bewegliche Stellelement des Aktuators zu belasten, kann ein zusätzlicher, vorzugsweise in Fahrtrichtung betrachtet vor der besagten Schwenkachse liegender Lastpfad zwischen dem Radträger dem Längslenker vorgesehen oder realisiert sein, der insbesondere in Vertikalrichtung wirksam sein kann, da dies die Richtung der größten Belastungen ist und durch einen solchen zusätzlichen Lastpfad in Form einer weiteren Abstützung die beiden anderen die über die die Schwenkachse bildenden Gelenke (oder Gummilager) führenden Lastpfade entlastet werden.

Zusammenfassend bestehen somit mehrere im folgenden nicht abschließend erläuterte Möglichkeiten für die Ausgestaltung der den Verdreh-Freiheitsgrad des Radträgers um die besagte Schwenkachse bindenden Verbindung zwischen dem Aktuator, genauer dem Aktuator-Stellelement, und dem Radträger.
Eine Möglichkeit ist die bereits erwähnte Verbindung über ein Spurstangen-element, welches beispielsweise nach Art einer Pendelstützte angeordnet ist, wobei eine Kraftübertragung nur in einer (einzigen) Richtung, nämlich der Längsrichtung des Spurstangen-Elements möglich ist. Dabei kann der Aktuator (wie bereits erwähnt bspw. durch ein Getriebe mit einem Elektromotor gebildet) fest mit dem Längslenker verbunden sein. Durch eine Anordnung des Aktuators quasi innerhalb des Längslenkers beansprucht der Aktuator nur wenig Bauraum, jedoch kann als Folge hiervon für den erforderlichen Durchtritt des Aktuator-Stellelements die Festigkeit des Längslenkers zunächst geschwächt werden, was andererseits durch eine geschickte Einbindung des Aktuator-Gehäuses als tragende Struktur in den Längslenker wieder kompensiert werden kann. Nach einer alternativen Ausführungsform kann der Aktuator ein Bestandteil des Spurstangen-Elements sein und somit wie bereits erwähnt wurde gelenkig beispielsweise am Längslenker (hier besitzt jedes Rad der Fzg.-Hinterachse einen eigenen Aktuator) oder direkt oder indirekt unter Zwischenschaltung eines Achsträgers oder dgl. am Fahrzeug-Aufbau gelagert sein, wobei neben zwei radindividuellen Aktuatoren hier auch ein vorzugsweise zentral angeordneter Aktuator für beide Fzg.-Hinterräder vorgesehen sein kann.

Eine weitere Möglichkeit für die Bindung des durch die besagte Schwenkachse dargestellten Freiheitsgrades des Radträgers gegenüber dem Längslenker besteht aus einem bereits erläuterten Spurstangen-Element und einem die weiter oben genannte zusätzliche Abstützung des Radträgers gegenüber dem Längslenker darstellenden Zusatzelement. Zusätzlich zum Spurstangen-Element ist vorzugsweise der im Bereich der Anbindung des Spurstangen-Elements liegende Abschnitt des Radträgers mit dem Längslenker über ein solches Zusatzelement verbunden, welches zumindest den für die Lenkbewegung oder Schwenkbewegung des Radträgers notwendigen Freiheitsgrad aufweist. Über dieses Zusatzelement ist der Radträger steifer mit dem Längslenker verbunden und es werden die beiden Kraftpfade oder Lastpfade über die die Schwenkachse bildenden Gelenke entlastet. Selbstverständlich kann das Zusatzelement auch mit dem Gehäuse des Aktuators verbunden bzw. an diesem abgestützt sein, insbesondere falls dieses wie weiter oben bereits erwähnt als mittragende Struktur des Längslenkers ausgelegt ist. Im Sinne einer vorteilhaften Weiterbildung, die als ein mögliches Ausführungsbeispiel figürlich dargestellt ist und im weiteren noch erläutert wird, kann das Spurstangen-Element baulich in das besagte Zusatzelement, d.h. in die weitere Abstützung zwischen dem Radträger und dem Längslenker integriert sein.

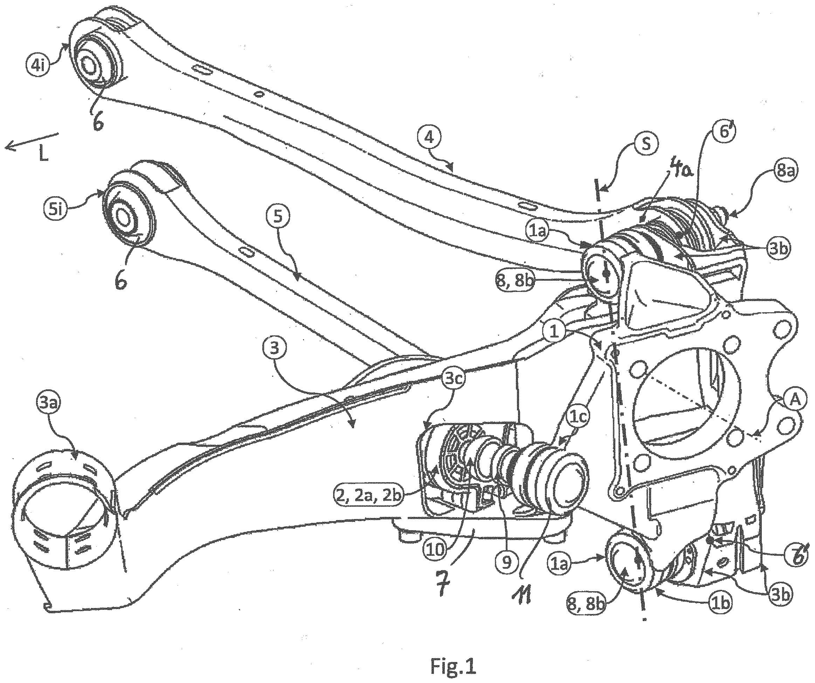

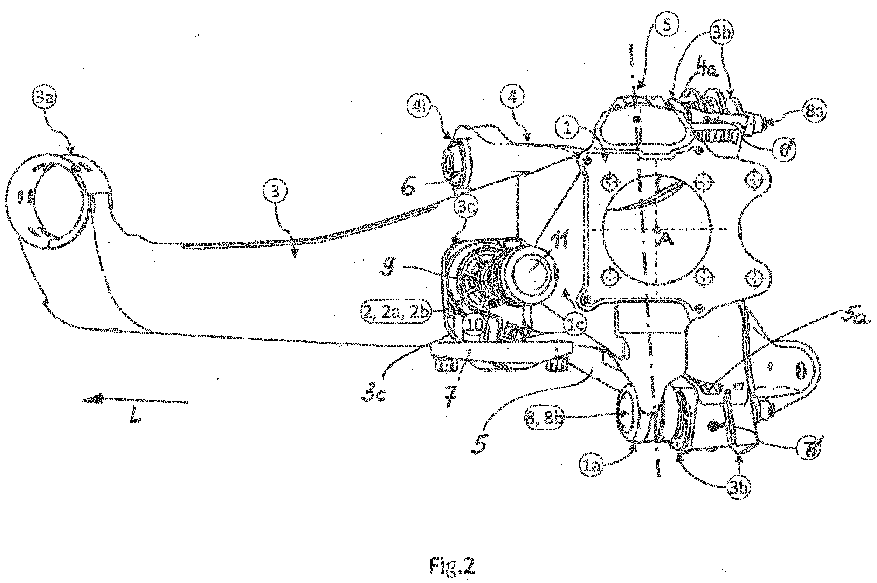

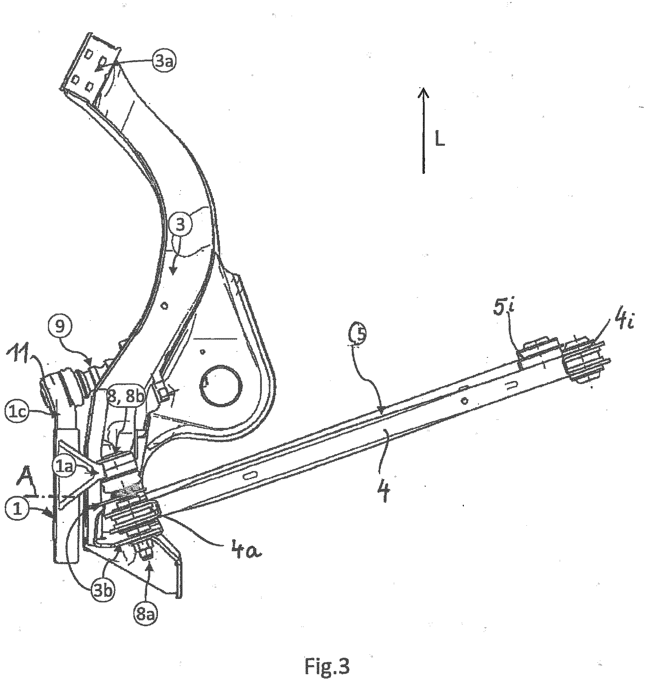

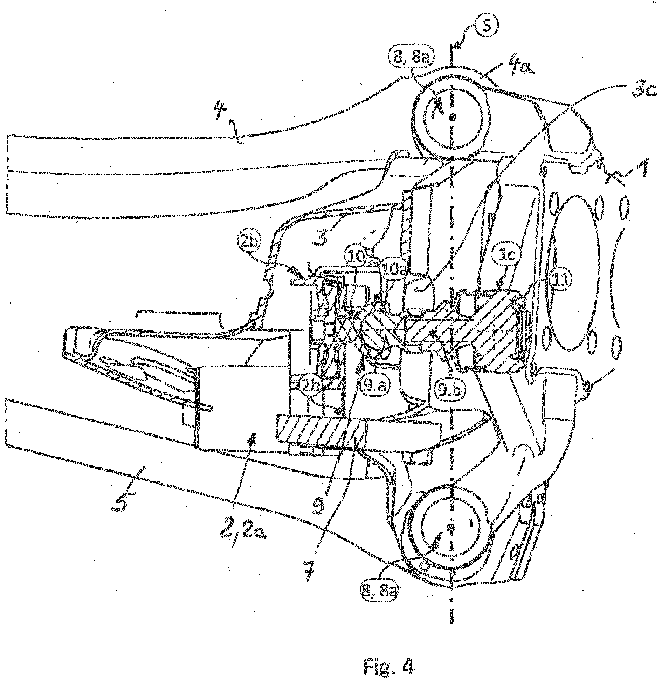

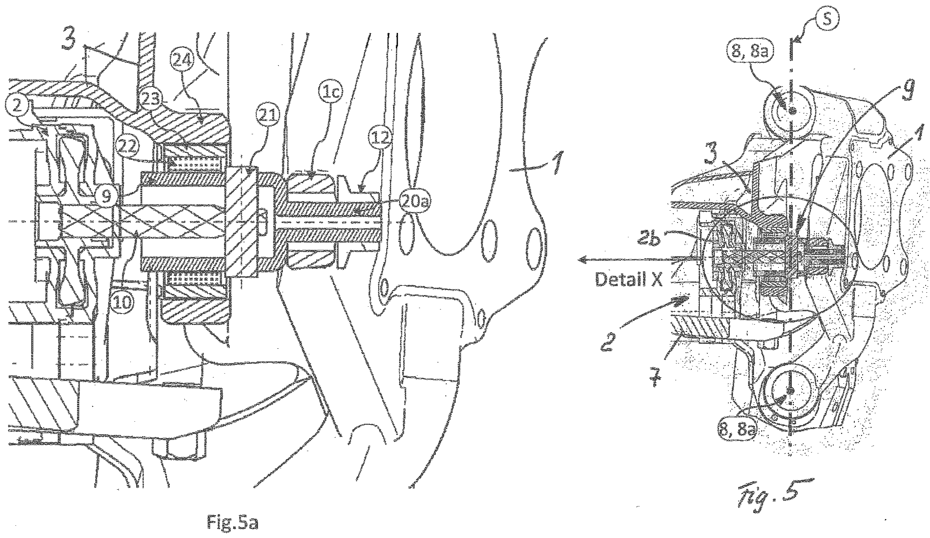

Weiter erläutert wird die Erfindung anhand zweier Ausführungsbeispiele, von denen ein erstes (ohne ein im vorhergehenden Absatz genanntes Zusatzelement) in den beigefügten **Figuren 1** - **4** dargestellt ist, während **Figur 5** ein in **Fig.5a** als Ausschnitt vergrößertes Detail eines zweiten Ausführungsbeispiels mit einem solchen Zusatzelement zeigt. Im einzelnen zeigt **Figur 1** eine Ansicht von schräg oben außen auf eine erfindungsgemäße Aufhängung des linken Hinterrads eines Personenkraftwagens, welche in **Figur 2** in einer horizontale Ansicht von außen, in **Figur 3** in einer Aufsicht von oben und in **Figur 4** als Ausschnitt vergrößert und teilweise geschnitten in einer Ansicht in Fahrzeug-Längsrichtung gegen Fahrtrichtung nach hinten betrachtet dargestellt ist. **Figur 5** zeigt einen der Figur 4 vergleichbaren Ausschnitt eines zweiten Ausführungsbeispiels, von dem das Detail X in **Fig.5a** nochmals vergrößert dargestellt ist. In sämtlichen Figuren sind gleiche Elemente mit den gleichen Bezugsziffern gekennzeichnet.

So trägt ein Radträger, der auch als Schwenklager bezeichnet werden kann, die Bezugsziffer 1, da an diesem Radträger 1 bzw. Schwenklager 1 in grundsätzlich üblicher Weise ein Fährzeug-Rad um seine Achse A drehbar gelagert ist, das zusammen mit diesem Radträger 1 um eine im wesentlich vertikal verlaufende Schwenkachse S geringfügig verschwenkbar ist, um mittels eines Aktuators 2 gezielt einen betragsmäßig relativ geringen Rad-Spurwinkel veränderbar einstellen zu können. Gegenüber dem figürlich nicht dargestellten Fahrzeug-Aufbau geführt wird der Radträger 1 durch einen im wesentlichen in Fzg.-Längsrichtung ausgerichteten Längslenker 3 sowie zwei im wesentlichen in Fzg.-Querrichtung ausgerichtete Querlenker 4, 5, die sich vorliegend in einer vertikalen Projektion im wesentlichen überdecken (vgl. Fig.3), zumindest jedoch bei Betrachtung in Fzg.-Längsrichtung (vgl. Fig.4) in verschiedenen Ebenen liegen und sich nicht schneiden. Jeder Querlenker 4, 5 weist endseitig ein inneres Lagerauge 4i bzw. 5i und ein äußeres Lagerauge 4a bzw. 5a auf, in die jeweils ein Gummilager 6 (nur an den inneren Lageraugen 4i, 5i sichtbar) eingepresst ist.

Der Längslenker 3 weist an seinem in Fahrtrichtung vorderen Ende eine Hülse 3a auf, die ein nicht dargestelltes Lager hält, über das dieses vordere Ende des Längslenkers 3 am Fahrzeug-Aufbau angelenkt ist. In seinem hinteren Bereich weist der Längslenker 3 nahe seiner oberen Kante und nahe seiner unteren Kante jeweils zwei Laschen 3b auf, von denen jede eine zumindest annähernd senkrecht zur Fahrzeug-Längsachse liegende Ebene beschreibt. Ausdrücklich soll auch eine am besten in Figur 3 sichtbare Neigung der durch die Laschen 3b gebildeten Ebene unter einem Winkel kleiner 90° gegenüber der Fahrzeug-Längsachse L unter den Begriff "zumindest annähernd senkrecht zur Fahrzeug-Längsachse liegend" fallen.

Zwischen den beiden oberen Laschen 3b des Längslenkers 3 befindet sich das äußere Lagerauge 4a des oberen Querlenkers 4 und zwischen den beiden unteren Laschen 3b des Längslenkers 3 befindet sich das äußere Lagerauge 5a des unteren Querlenkers 5. Die in den Lageraugen 4a, 5a vorgesehenen Gummilager 6, deren Mittelpunkte in den Figuren 1, 2 mit der Bezugsziffer 6' gekennzeichnet sind, sind mittels eines die Laschen 3b durchdringenden Bolzens 8a am Radträger 1 befestigt, wie im folgenden Absatz erläutert wird. Damit ist also jeder Querlenker 4, 5 um eine zumindest annähernd in Fahrzeug-Längsrichtung ausgerichtete (und durch den besagten Bolzen 8a gebildete) Achse gegenüber dem Radträger 1 verschwenkbar, um Vertikalbewegungen zwischen dem Rad und dem Fahrzeug-Aufbau, an dem die genannten Lenker 3, 4, 5 entweder direkt oder unter Zwischenschaltung eines Achsträgers indirekt mit ihrem dem Radträger 1 abgewandten Ende angelenkt sind, zu ermöglichen.

Der Radträger 1 weist in einem in Fzg.-Fahrtrichtung vor der Rad-Drehachse A liegenden Abschnitt in seinem oberen und unteren Bereich nach innen abragende Tragflansche 1a auf, die ebenso wie die Laschen 3b des Längslenkers 3 jeweils eine zumindest annähernd senkrecht zur Fahrzeug-Längsachse liegende Ebene beschreiben, wobei die durch die Tragflansche 1 a des Radträgers 1 gebildeten Ebenen im wesentlichen parallel zu den durch die Laschen 3b des Längslenkers 3 gebildeten Ebenen sind. Jeder Tragflansch 1a weist eine kreiszylindrische Aufnahme auf, in die vorliegend jeweils ein Zapfengelenk 8 mit seinem Kopf bzw. Gelenkgehäuse 8b eingepresst ist. Die auch als Bolzen 8a bezeichneten Gelenkzapfen 8a der beiden dem Fachmann bekannten Zapfengelenke 8 erstrecken sich vorliegend in einer im wesentlichen horizontalen Ebene gegen Fzg.-Fahrtrichtung nach hinten und stehen jedenfalls in Konstruktiorislage senkrecht auf den durch die Tragflansche 1a und Laschen 3b gebildeten Ebenen. Dabei ist der Bolzen 8a bzw. der Gelenkzapfen 8a des (bspw. in Fig.1) oberen Zapfengelenks 8 durch die hierfür mit einer geeigneten Durchtrittsbohrung versehenen oberen Laschen 3b sowie durch das Gummilager 6 des oberen Querlenkers 4 hindurchgeführt und es ist der Bolzen 8a bzw. Gelenkzapfen 8a des (bspw. in Fig.1) unteren Zapfengelenks 8 durch die hierfür mit einer geeigneten Durchtrittsbohrung versehenen unteren Laschen 3b sowie durch das Gummilager 6 des unteren Querlenkers 5 hindurchgeführt. Auf das freie Ende jedes zumindest im Endabschnitt mit einem Gewinde versehenen Bolzens 8a bzw. Gelenkzapfens 8a ist eine nicht mit einer Bezugsziffer versehene, jedoch zumindest in Fig.2 gut erkennbare Mutter aufgeschraubt, mit der somit nicht nur der jeweilige Querlenker 4 bzw. 5, sondern auch der Längslenker 3 am Radträger 1 befestigt und gegen diesen verspannt ist. Dabei wird durch die Gelenkigkeit in den Gelenkgehäusen 8a der beiden Zapfengelenke 8 die durch deren in den Figuren verdickt dargestellten Gelenkmittelpunkte verlaufende Schwenkachse S gebildet, um die nun der Radträger 1 gegenüber dem durch den Längslenker 3 sowie durch die Querlenker 4, 5 gebildeten Verbund verschwenkbar ist. Die exakte Positionierung der beiden Tragflansche 1a relativ zueinander bestimmt dabei die Lage der Schwenkachse S im Raume; dabei ist diese Schwenkachse S im wesentlichen vertikal verlaufend ausgerichtet. Selbstverständlich, können - wie in der Beschreibungseinleitung ausgeführt - anstelle eines oder der beiden Zapfengelenke 8 auch (eine) andere Gelenk-Anordnung(en) vorgesehen sein, die mittels zweier dem Gelenkzapfen 8a des Zapfengelenks 8 funktional vergleichbarer Bolzen 8a der entsprechenden gegenseitigen Befestigung zwischen dem Radträger 1, dem Längslenker 3 und den Querlenkern 4, 5 dienen.

Der durch die Schwenkachse S beschriebene Freiheitsgrad des Radträgers 1 muss selbstverständlich gebunden sein, wofür am Radträger 1 ein sich im wesentlichen bzw. zumindest anteilig in Fahrzeug-Querrichtung erstreckendes Spurstangen-Element 9 angelenkt ist, das mit seinem dem Radträger 1 abgewandten Ende am bereits kurz erwähnten Aktuator 2 angebunden ist. Zwei mögliche Ausführungsformen hierfür sind in den im Weiteren erläuterten **Figuren 4****,** **5** dargestellt. Mit geeigneter Ansteuerung dieses beispielsweise als Elektromotor mit geeignetem Getriebe ausgebildeten Aktuators 2 durch eine elektronische Steuereinheit kann das Spurstangen-Element 9 derart in Richtung von dessen Längsachse verlagert werden, dass das vom Radträger 1 getragene Hinterrad des Fahrzeugs einen gewünschten Spurwinkel gegenüber der Fahrzeug-Längsachse L einschließt.

Beim Ausführungsbeispiel nach **Figur 4** ist das besagte Spurstangen-Element 9 zweiteilig ausgebildet und besteht zum einen aus dem Gelenkzapfen 9b eines weiteren Zapfengelenks 11, welches im wesentlichen in Fzg.-Querrichtung ausgerichtet in eine in einem Stützflansch 1 c des Radträgers 1 vorgesehene kreiszylindrische Aufnahme mit seinem Gelenkgehäuse eingepresst ist. Auf das freie Ende dieses Gelenkzapfens 9b ist als zweites Element des Spurstangen-Elements 9 eine Gelenkkugel 9a aufgebracht, die in eine Kugelaufnahme 10a eingesetzt ist, die am freien Ende eines Stellelements 10 des Aktuators 2 vorgesehen ist. Dieses Stellelement 10 des Aktuators 2 ist im nur bruchstückhaft dargestellten Getriebe 2b des Aktuators 2, der weiterhin einen von einem Gehäuse 2a umschlossenen und gezielt ansteuerbaren Elektromotor besitzt, mittels dieses Elektromotors nach Art eines Spindeltriebs längs, d.h. in Längsrichtung des Stellelements 10 verlagerbar.

Wie aus den **Figuren 1** - **4** ersichtlich ist, ist der Aktuator 2 mit seinem Gehäuse 2a und dem sich daran anschließenden Getriebe 2b teilweise innerhalb des als Hohlkörper ausgebildeten Längslenkers 3 angeordnet, wobei in der dem Radträger 1 zugewandten Seitenwand dieses Längsträgers 3 ein Durchbruch 3c vorgesehen ist, durch den zumindest das Spurstangen-Element 9 hindurch ragt, wobei dieser Durchbruch 3c relativ groß bemessen ist, um Relativbewegungen des Spurstangen-Elements 9 in Fahrzeug-Längsrichtung und/oder in Vertikalrichtung zu ermöglichen, die sich neben einer durch den Aktuator 2 hervorgerufenen Verlagerung des Spurstangen-Elements 9 in Fzg.-Querrichtung durch - wie in der Beschreibungseinleitung erläutert wurde - äußere auf das Fzg.-Rad einwirkende Kräfte einstellen können. Damit durch solche Relativbewegungen des Spurstangen-Elements 9 in Fahrzeug-Längsrichtung und/oder in Vertikalrichtung gegenüber dem Längslenker 3 und dem an diesem befestigten Aktuator 2 das Getriebe 2b bzw. das Stellelement 10 des Aktuators 2 oder dessen Elektromotor keinen Schaden nimmt, ist das Spurstangen-Element 9 einerseits über die Kugelaufnahme 10a mit der Gelenkkugel 9a und andererseits über das Kugelgelenk des Zapfengelenks 11 nach Art einer Pendelstütze frei von Querkräften und Drehmomenten geführt. Ferner ist in den Figuren erkennbar, dass das Aktuator-Gehäuse 2a auf einer Stützplatte 7 befestigt ist, die am Randbereich des Durchbruchs 3c sich beidseitig über diesen hinaus erstreckend mit dem Längslenker 3 verschraubt ist und damit an diesem Längslenker 3 den durch den Durchbruch 3c hervorgerufenen Stabilitätsverlust kompensiert. Dabei kann die Stützplatte 7 durchaus ein Bestandteil des Aktuator-Gehäuses 2a sein.

Beim Ausführungsbeispiel nach **Figur 5** ist der Aktuator 2 wie soeben anhand der Figuren 1 - 4 beschrieben am Längslenker 3 befestigt; abweichend von der Darstellung in Figur 4 ist jedoch das Spurstangen-Element 9 gestaltet. Nach Art eines Kreuzgelenkes ist über einen im wesentlichen vertikal ausgerichteten Gelenkstift 21 ein hülsenförmiger Abschnitt des Spurstangen-Elements 9 mit dem Endabschnitt des Stellelements 10 des Aktautors 2 unter geringem Spiel in Fzg.-Längsrichtung (also quasi in einem Langloch des Stellelements 10 mit der größeren Halbachse in Fzg.-Längsrichtung) verbunden und in einem elastischen Gummi-Ringelement 22, welches mit einem dieses umgebenden Hülsenelement 23 nach Art eines Gummilagers in eine geeignete Aufnahme 24 im Längslenker 3 eingesetzt ist, längsverschiebbar gelagert. Mit einem sich an den genannten hülsenförmigen Abschnitt nach außen hin anschließenden stiftartigen Abschnitt ist das gezeigte Spurstangen-Element 9 im Stützflansch 1 c des Radträgers 1 über eine Sicherungsmutter 12 befestigt. Mit einer Längs-Verlagerung des Aktuator-Stellelements 10 in Fzg.-Querrichtung wird somit auch das Spurstangen-Element 9 wie gewünscht in Fzg.-Querrichtung verlagert.

Eine geringfüge vertikale Relativbewegung zwischen dem Radträger 1 und dem Längslenker 3 wird über den hülsenförmigen Abschnitt des Spurstangen-Elements 9 im Gummi-Ringelement 22 teilweise abgestützt, wobei dieser hülsenförmige Abschnitt mittels des Gelenkstiftes 21 in Vertikalrichtung gegenüber dem Stellelement 10 verlagerbar ist, so dass eine solche Relativbewegung nicht auf das Aktuator-Stellelement 10 übertragen wird. Vergleichbares gilt wegen des im vorhergehenden Absatz genannten Spiels in Fzg.-Längsrichtung zwischen dem Gelenkstift 21 und dem Stellelement 10 für eine in Fzg.-Längsrichtung erfolgende geringfügige Relativbewegung zwischen dem Radträger 1 und dem Längslenker 3. Das vorliegende Spurstangen-Element 9 übernimmt somit neben seiner ursprünglichen Funktion, nämlich den durch die Schwenkachse S beschriebenen Freiheitsgrad des Radträgers 1 zu binden, die weitere Funktion eines in der Beschreibungseinleitung genannten Zusatzelementes, über welches neben den Zapfengelenken 8 der Radträger 1 am Längslenker 3 abgestützt ist, so dass vorliegend das Spurstangen-Element 9 quasi funktional in ein eine weitere Abstützung bildendes Zusatzelement integriert ist. In alternativen hier nicht gezeigten Ausführungsformen kann das Spurstangen-Element 9 auch nur geometrisch in ein geeignetes Zusatzelement integriert sein oder es kann unabhängig vom Spurstangen-Element 9 eine weitere Abstützung zwischen dem Radträger 1 und dem Längslenker 3 unter Darstellung des für ein gewünschtes Verschwenken des Radträgers 1 um die Schwenkachse S benötigten Freiheitsgrades vorgesehen sein.

Selbstverständlich sind weitere alternative Ausführungsformen möglich; beispielsweise kann für die beiden Radträger der Hinterachse ein einziger im wesentlichen zentral angeordneter Aktuator vorgesehen sein, wie überhaupt eine Vielzahl von Details insbesondere konstruktiver Art durchaus abweichend von obigen Erläuterungen gestaltet sein kann, ohne den Inhalt der Patentansprüche zu verlassen.

## Patentansprüche

1. Fahrzeug-Einzelradaufhängung für ein mittels eines Aktuators zumindest geringfügig lenkbares Hinterrad eines zweispurigen Fahrzeugs, dessen Radträger (1) durch einen sich im wesentlichen in Fahrzeug-Längsrichtung erstreckenden Längslenker (3) sowie zwei sich zumindest annähernd in Fahrzeug-Querrichtung erstreckende und bei Betrachtung in Fahrzeug-Längsrichtung in verschiedenen Ebenen liegende und sich nicht schneidende Querlenker (4, 5) geführt ist, deren dem Radträger (1) abgewandte Enden gelenkig direkt oder indirekt mit dem Fahrzeug-Aufbau verbunden sind, während das andere Ende jedes Querlenkers mittels eines Bolzens (8a) oder dergleichen über ein Gummilager oder ein zumindest einen geringen Drehfreiheitsgrad aufweisendes Gelenk am Radträger befestigt ist, **dadurch gekennzeichnet, dass** mittels der selben beiden genannten Bolzen (8a) oder dgl. auch der Längslenker (3) jeweils über ein Gummilager oder ein zumindest einen geringen Drehfreiheitsgrad aufweisendes Gelenk solchermaßen direkt mit dem Radträger (1) verbunden ist, dass der Radträger (1) gegenüber dem Längslenker (3) zumindest geringfügig um eine im wesentlichen in Vertikalrichtung verlaufende und durch diese Gummilager oder Gelenke gebildete Schwenkachse (S) verschwenkbar ist, wobei dieser so gebildete Dreh-Freiheitgrad des Radträgers durch ein am Radträger (1) angelenktes Spurstangen-Element (9) gebunden ist, welches mittels des Aktuators (2) zumindest anteilig in Fahrzeug-Querrichtung verlagerbar ist.

2. Fahrzeug-Einzelradaufhängung nach Anspruch 1, **dadurch gekennzeichnet, dass** die zumindest einen geringen Drehfreiheitsgrad aufweisenden Gelenke zwischen dem Längslenker und dem Radträger als Kugelhülsengelenke oder Zapfengelenke ausgebildet sind.

3. Fahrzeug-Einzelradaufhängung nach Anspruch 1 oder 2, **dadurch gekennzeichnet, dass** in der Wirkkette des Spurstangen-Elements zumindest ein Gelenk vorgesehen ist, welches das Aktuator-Stellelement im wesentlichen frei von Querkräften und nicht um die Achse des Stellelements gerichteten Drehmomenten hält.

4. Fahrzeug-Einzelradaufhängung nach einem der vorangegangenen Ansprüche, **dadurch gekennzeichnet, dass** für die beiden Radträger der Hinterachse ein einziger im wesentlichen zentral angeordneter Aktuator vorgesehen ist.

5. Fahrzeug-Einzelradaufhängung nach einem der Ansprüche 1 bis 3, **dadurch gekennzeichnet, dass** jedem Radträger (1) der Hinterachse ein eigener Aktuator (2) zugeordnet ist, der am Längslenker (3) gelagert ist.

6. Fahrzeug-Einzelradaufhängung nach Anspruch 5, **dadurch gekennzeichnet, dass** der Aktuator starr am Längslenker gelagert ist.

7. Fahrzeug-Einzelradaufhängung nach Anspruch 5, **dadurch gekennzeichnet, dass** der Aktuator solchermaßen gelenkig am Längslenker gelagert ist, dass eine gewünschte Bewegung des Aktuator-Stellelements unverfälscht auf das mit diesem verbundene Spurstangen-Element übertragen wird.

8. Fahrzeug-Einzelradaufhängung nach einem der vorangegangenen Ansprüche, **dadurch gekennzeichnet, dass** der Radträger neben den durch die beiden genannten Bolzen befestigte Gelenken oder Gummilagern über eine weitere Abstützung am Längslenker abgestützt ist, die zumindest einen Freiheitgrad für die vom Aktuator hervorgerufene Schwenkbewegung des Radträgers besitzt.

9. Fahrzeug-Einzelradaufhängung nach Anspruch 8,
**dadurch gekennzeichnet, dass** das Spurstangen-Element in die weitere Abstützung integriert ist.

## Claims

1. A vehicle independent wheel suspension for a rear wheel, which can be at least minimally steered by an actuator, of a double-track vehicle, the wheel carrier (1) of which is guided by a longitudinal control arm (3) which extends substantially, in the longitudinal direction of the vehicle and by two transverse non-intersecting control arms (4, 5) which extend at least approximately in the transverse direction of the vehicle and are located in different planes when observed in the vehicle longitudinal direction, the ends of which, remote from the wheel carrier (1) are directly or indirectly connected in an articulated manner to the vehicle body, while the other end of each transverse control arm is attached to the wheel carrier by a bolt (8a) or the like via a rubber bearing or by a joint which has at least a small rotational degree of freedom, **characterised in that** the longitudinal control arm (3) is also directly connected to the wheel carrier (1) by means of the same two mentioned bolts (8a) or the like, in each case via a rubber bearing or a joint which has at least a small rotational degree of freedom, such that the wheel carrier (1) is at least slightly swivellable, relative to the longitudinal control arm (3), about a swivel axis (S) which runs substantially in a vertical direction and is formed by these rubber bearings or joints, this rotational degree of freedom, formed in this way, of the wheel carrier being bound by a tie rod element (9) which is connected to the wheel carrier (1) and is at least partly displaceable in the transverse direction of the vehicle by the actuator (2).

2. A vehicle independent wheel suspension according to claim 1, **characterised in that** the joints, having at least a small rotational degree of freedom, between the longitudinal control arm and the wheel carrier, are configured as ball bushing joints or as pivot joints.

3. A vehicle independent wheel suspension according to claim 1 or claim 2, **characterised in that** provided in the functional chain of the tie rod element is at least one joint which keeps the actuator adjuster element substantially free from transverse forces and torques which are not directed about the axis of the adjuster element.

4. A vehicle independent wheel suspension according to any one of the preceding claims, **characterised in that** a single substantially centrally arranged actuator is provided for the two wheel carriers of the rear axle.

5. A vehicle independent wheel suspension according to any one of claims 1 to 3,
**characterised in that** associated with each wheel carrier (1) of the rear axle is an individual actuator (2) which is mounted on the longitudinal control arm (3).

6. A vehicle independent wheel suspension according to claim 5, **characterised in that** the actuator is mounted rigidly on the longitudinal control arm.

7. A vehicle independent wheel suspension according to claim 5, **characterised in that**
the actuator is mounted in an articulated manner on the longitudinal control arm such that a desired movement of the actuator adjuster element is transmitted in an unaltered form to the tie rod element which is connected to the actuator adjuster element.

8. A vehicle independent wheel suspension according to any one of the preceding claims, **characterised in that** the wheel carrier is supported on the longitudinal control arm by a further support in addition to the joints or rubber bearings which are attached by the two mentioned bolts, which further support has at least one degree of freedom for the swivel movement of the wheel carrier which is induced by the actuator.

9. A vehicle independent wheel suspension according to claim 8, **characterised in that**
the tie rod element is integrated into the further support.

## Revendications

1. Suspension de roue indépendante de véhicule pour une roue arrière pouvant être au moins légèrement braquée au moyen d'un actionneur d'un véhicule à deux voies dont le porte-roue (1) est guidé par un bras oscillant longitudinal (3) s'étendant essentiellement dans la direction longitudinale du véhicule ainsi que par deux bras oscillants transversaux (4, 5) s'étendant au moins approximativement dans la direction transversale du véhicule, et en considérant la direction longitudinale du véhicule situés dans des plans différents, et ne se croisant pas, dont les extrémités situées à l'opposé du porte-roue (1) sont directement ou indirectement articulées sur la carrosserie du véhicule tandis que l'autre extrémité de chacun des bras oscillants transversaux est fixée au porte-roue (1) au moyen d'un boulon (8a) ou similaire par l'intermédiaire d'un palier en caoutchouc ou d'une articulation présentant une liberté de rotation au moins faible,
**caractérisée en ce que**
au moyen des mêmes deux boulons (8a) ou similaires, le bras oscillant longitudinal (3) est également relié directement au porte-roue (1) respectivement par l'intermédiaire d'un palier en caoutchouc ou d'une articulation présentant une liberté de rotation au moins faible, de sorte que le porte-roue (1) puisse pivoter au moins faiblement par rapport au bras oscillant longitudinal autour d'un axe de pivotement (S) s'étendant essentiellement en direction verticale et formé par le palier en caoutchouc ou l'articulation, la liberté de rotation ainsi formée du porte-roue (1) étant liée à un élément de barre d'accouplement (9) articulé sur le porte-roue qui peut être déplacé au moyen de l'actionneur (2) au moins proportionnellement dans la direction transversale du véhicule.

2. Suspension de roue indépendante de véhicule conforme à la revendication 1,
**caractérisée en ce que**
les articulations présentant une liberté de rotation au moins faible entre le bras oscillant longitudinal et le porte-roue sont réalisées sous la forme d'articulations à douille sphérique ou d'articulations pivotantes.

3. Suspension de roue indépendante de véhicule conforme à la revendication 1 ou 2,
**caractérisée en ce qu'**
il est prévu, dans la chaîne d'action de l'élément de barre d'accouplement, au moins une articulation qui maintient l'élément de réglage de l'actionneur essentiellement exempt de contraintes transversales et non de couples de rotation dirigés autour de l'axe de cet élément de réglage.

4. Suspension de roue indépendante de véhicule conforme à l'une des revendications précédentes,
**caractérisée en ce qu'**
il est prévu, pur les deux porte-roues de l'essieu arrière, un seul actionneur essentiellement central.

5. Suspension individuelle de roue de véhicule conforme à l'une des revendications 1 à 3,
**caractérisée en ce qu'**
est associé à chaque porte-roue (1) de l'essieu arrière, un actionneur propre (2) qui est monté sur le bras oscillant longitudinal (3).

6. Suspension individuelle de roue de véhicule conforme à la revendication 5,
**caractérisée en ce que**
l'actionneur est monté rigidement sur le bras oscillant longitudinal.

7. Suspension de roue individuelle de véhicule conforme à la revendication 5,
**caractérisée en ce que**
l'actionneur est articulé sur le bras oscillant longitudinal de façon à permettre de transmettre un mouvement souhaité de l'élément de réglage de l'actionneur de façon non modifiée à l'élément de barre d'accouplement relié à celui-ci.

8. Suspension de roue de véhicule indépendante conforme à l'une des revendications précédentes,
**caractérisée en ce que**
le porte-roue s'appuie, sur le bras oscillant longitudinal, outre sur les articulations ou paliers en caoutchouc fixés par les deux boulons, sur un autre élément d'appui, qui possède au moins une liberté de rotation pour le mouvement de pivotement du porte-roue provoqué par l'actionneur.

9. Suspension individuelle de roue de véhicule conforme à la revendication 8,
**caractérisée en ce que**
l'élément de barre d'accouplement est intégré dans l'autre élément d'appui.
